# EUROPÄISCHE PATENTSCHRIFT

(11) **EP 3 186 540 B1**
(45) Veröffentlichungstag und Bekanntmachung des Hinweises auf die Patenterteilung: **01.08.2018**
(21) Anmeldenummer: 15762917.1
(22) Anmeldetag: 20.08.2015
(51) Int. Cl.: F16M 7/00

(54) **GELENKIGER STELLFUSS FUER MASCHINEN ODER GERAETE**
ARTICULATED LEVELING FOOT FOR MACHINES OR DEVICES
PIED RÉGLABLE ARTICULÉ DESTINÉ À DES MACHINES OU DES APPAREILS

(30) Priorität: 26.08.2014 DE 202014006983 U
(43) Veröffentlichungstag der Anmeldung: 05.07.2017
(73) Patentinhaber: Ramsauer, Dieter, 58332 Schwelm (DE)
(72) Erfinder: Ramsauer, Dieter, 58332 Schwelm (DE)
(74) Vertreter: Stratmann, Ernst
(86) Internationale Anmeldenummer: PCT/EP2015/001705
(87) Internationale Veröffentlichungsnummer: WO 2016/030006

(56) Entgegenhaltungen:
- EP-A1- 1 124 086
- WO-A1-2008/135044
- US-A- 331 460
- US-A1- 2004 262 467

## Beschreibung

### Gebiet der Erfindung

Die Erfindung betrifft einen Stellfuß für Maschinen oder Geräte, umfassend einen Bodenteller, der auf der bodenabgewandten Tellerseite einen Aufnahmeraum mit der Geometrie einer Teilkugel, vorzugsweise mit eine Halbkugel nicht oder nur geringfügig überschreitenden Abmessungen, des weiteren mit einer Gewindestange, die an ihrem einen Ende eine in den Aufnahmeraum einbringbare Teilkugel aufweist, wobei die Teilkugel der Gewindestange in den Aufnahmeraum passend aufnehmbar ist, wobei die Geometrie der Teilkugel der Gewindestange die des Aufnahmeraums deutlich überschreitet, und dadurch die Halbkugel in dem offenen Raum durch Vor- oder Rücksprünge festhält.

### Stand der Technik

Ein derartiger Stellfuß ist aus einem Prospekt der Firma Fath GmbH Components, siehe die Seiten 24, 33, 32, 35, 48 und 49 bereits bekannt. Hingewiesen sei auch auf die WO 2008/135044 A1.

Beim Stand der Technik werden bei den Füßen mit Gelenk Gewindestangen benutzt, mit Kugel, die in der Herstellung sehr teuer sind. Meistens werden sie aus Sechskantmaterial gefertigt, wegen der Möglichkeit der Justierung mit einem Schraubenschlüssel. Ein weiterer Nachteil ist, dass der Durchmesser der Kugel hier nicht größer sein kann als der Durchmesser der Schlüsselweite und somit die Stützfläche klein ist und diese auch Innengewinde besitzt, wie sich aus dem Blatt 49 der Entgegenhaltung ergibt. Ein weiterer Nachteil ist, dass der Durchmesser der Kugel sehr klein werden kann. Andererseits muss ein Sechskantschlüssel beiden entsprechen und somit ist die projizierte Fläche klein und die Tragfähigkeit begrenzt.

Wie man dem Stand der Technik weiterhin entnehmen kann, hat man auch versucht, unter Verwendung von Sechskantschrauben eine andere Lösung zu finden, die aber wegen der Nacharbeit der Sechskantschrauben und der Benutzung weiterer Teile auch erhebliche Nachteile hat.

### Aufgabe der Erfindung

Aufgabe der Erfindung ist es, eine Stellfußschraube zu schaffen, die eine größere Tragkraft hat und billiger herzustellen ist, als die obige Anordnung des Standes der Technik.

### Lösungswege

Gelöst wird die Aufgabe dadurch, dass die Gewindestange ein herkömmlicher Schraubbolzen mit Sechskantkopf ist, und dass die in den Kugelaufnahmeraum einbringbare Kugel aus zumindest zwei ineinander steckbaren Teilschalen oder -hälften besteht, die den Sechskantkopf drehstarr umschließen.

Die grundlegende Idee ist also, eine Standard-Sechskantschraube oder dergleichen zu benutzen, die keine Arbeit erfordert. Der Sechskantkopf der Schraube hat eine große Fläche. Wenn ich diese mit zwei Teil- oder Halbschalen abschließe, um eine Kugel zu bilden, hat sie einen verhältnismäßig großen Durchmesser und wegen der enormen projizierten Fläche große Tragkraft. Da die Gewindestangen mit Kugel (Stand der Technik) in vielen unterschiedlichen Längen bereitgestellt werden müssen, siehe die Blätter 32 und 33 der Unterlagen des Standes der Technik, ist auch ein modulares System kaum zu verwirklichen. Mit den beiden Teil- oder Halbschalen jedoch ist dies möglich, weil einfach jede Standard-Schraubenlänge eingesetzt werden kann.

Ein weiterer Nachteil des Standes der Technik liegt in der Montage der Kugelstangen in dem Teller. Es wird Hammermontage im Prospekt angegeben, siehe beispielsweise die Seite 35. Mit den beiden Teil- oder Halbschalen ist dagegen ein einfaches Einstecken von Hand möglich, wobei einfach jede passende Standard-Schraubenlänge eingesetzt werden kann.

Bei den Kunststofftellern verjüngt sich die eingebrachte Kugelvertiefung und unter den Hammerschlägen gibt der Kunststoff nach und lässt die einstückige Kugel durch die Engstelle durchschlüpfen.

Ein Vorteil der zweischaligen Konstruktion der Kugel liegt darin, dass der Kopf einen Sechkantschraubbolzen benutzen lässt und sich eine Feder einbauen lässt, die nach Durchschlüpfen der Fügeteile (Schalen und Teller) auf Spannung hält. Bei den Schalen aus Polyamid (PA) können diese durch Längs- oder Querbögen (Biegung) die Spannung erzeugen. Falls der Fuß beim Anheben des Fußes nicht auseinander fallen soll, wird nun Sorge getragen, dass die Kugel der Halbschalen ein wenig kleiner ist als das Durchschlupfloch des Tellers. Nach Durchschlüpfen hintergreift die durch die Federspannung etwas größer gewordene Kugel die Telleröffnung an zwei gegenüberliegenden Seiten und hat quasi ovale Gestalt. Bei einem Teller selbst aus unnachgiebigem Edelstahl kann auf irgendein vom Material her nachgiebiges nicht metallisches Teil verzichtet werden. Wenn der Fuß nach Montage nicht mehr angehoben wird, kann man auf die Federwirkung auch verzichten.

Gemäß einer Weiterbildung werden die beiden Teil- oder Halbschalen durch Bohrungs-/Stifteinrichtungen zueinander ausgerichtet und arretiert.

Es ist also von Vorteil und eine Ausführungform der Erfindung, wenn der Stellfuß so ausgestaltet ist, dass die Halbschalen durch Federwirkung auseinander gedrückt werden.

Die Federwirkung kann wie gesagt, durch eine Spiraldruckfeder erzeugt werden, alternativ aber auch durch eine spannungserzeugende Form des Materials der Kugel oder des Tellers, insbesondere dann, wenn der Bodenteller aus Kunststoff wie PA besteht und der Aufnahmeraum sich in Richtung der Bodenfläche verjüngt.

Von besonderem Vorteil ist es, wenn die beiden Teilschalen oder Schalenhälften identisch aufgebaut sind. So könnte die eine Seite der Schalenhälfte eine Arretierleiste und die andere Seite der Schalenhälfte einen Rücksprung zur Aufnahme der Arretierleiste der anderen Schalenhälfte aufweisen.

Die Teilschalen können aber auch unterschiedlich sein, z. B. ¼ und ¾ der Kugel umfassen.

Die Schalenhälften oder Teile können gemäß einer anderen Ausführungsform Drehflügel zur Justierung der Höhe durch Drehung von Hand aufweisen.

Alternativ können die Schalenhälften oder Teile eine Schlüsselweite SW zur Justierung unter Last mittels Werkzeug aufweisen.

Zur Stabilisierung kann es auch günstig sein, die Bodenfläche des Bodentellers mit umlaufenden Rippen auszugestalten.

Die nach unten gerichtete gemeinsame Kugelfläche der Schalenhälften kann gestuft sein, zur Minimierung der Auftreibkräfte.

Aus dem gleichen Grunde kann es günstig sein, wenn die von den Halbschalen gebildete Kugelfläche unterhalb der Mittellinie der Kugel einen umlaufenden Rücksprung zur Verminderung der Auftreibkräfte aufweist.

### Figurenbeschreibung

Die Erfindung wird nachfolgend anhand von Ausführungsbeispielen näher erläutert, die in den Zeichnungen dargestellt sind.

### Es zeigt:

- Fig. 1A: eine Axialschnittansicht durch einen erfindungsgemäßen gelenkigen Stellfuß, der ein Bein oder die Unterseite einer Maschine oder eines Gerätes auf dem Boden einstellbar abstützt und eine Höheneinstellung ermöglicht;
- Fig. 1B: eine Ansicht von oben auf den gelenkigen Stellfuß der Fig. 1A;
- Fig. 2A: die Seitenansicht der Halbschale eines dem Aufbau der Kugel dienenden Bauteils;
- Fig. 2B: eine Stirnansicht mit einer Ansicht von oben gemäß Fig. 2A;
- Fig. 3: eine geschnittene Seitenansicht eines Fußes ohne Federspannung;
- Fig. 4: eine ähnliche Ansicht wie Fig. 3, jedoch mit unterschiedlichen Kugelteilen;
- Fig. 5A: eine axiale Schnittansicht,
- Fig. 5B: eine Draufsicht,
- Fig 5C: eine perspektivische Ansicht und
- Fig. 5D: eine auseinander gezogene Ansicht einer weiteren Ausführungsform;
- Fig. 6A: eine auseinander gezogene Darstellung des Schraubbolzens mit Sechskantkopf und die beiden Kugelhälften;
- Fig. 6B: in zusammengebauter Stellung die Anordnung von Fig. 6A;
- Fig. 7A: eine Ausführungsform mit nachgiebigem Kunststoff als Bauelement für die Kugelhälften;
- Fig. 7B: den zugehörigen Fuß mit seinem Aufnahmeraum;
- Fig. 8A: eine Axialansicht einer weiteren Ausführungsform der Kugel;
- Fig. 8B: eine Ansicht von oben auf die Anordnung der Fig. 8A;
- Fig. 8C: eine Draufsicht auf die zugehörige Schalenhälfte;
- Fig. 9A: die Axialansicht einer noch anderen Ausführungsform;
- Fig. 9B: eine Ansicht von oben auf die Anordnung der Fig. 9A;
- Fig. 9C: eine Ansicht der zugehörigen Gewindestange mit aufspreizbarem Kopf;
- Fig. 9D: die zugehörige Metallhälfte.

### Detaillierte Beschreibung der Ausführungsformen

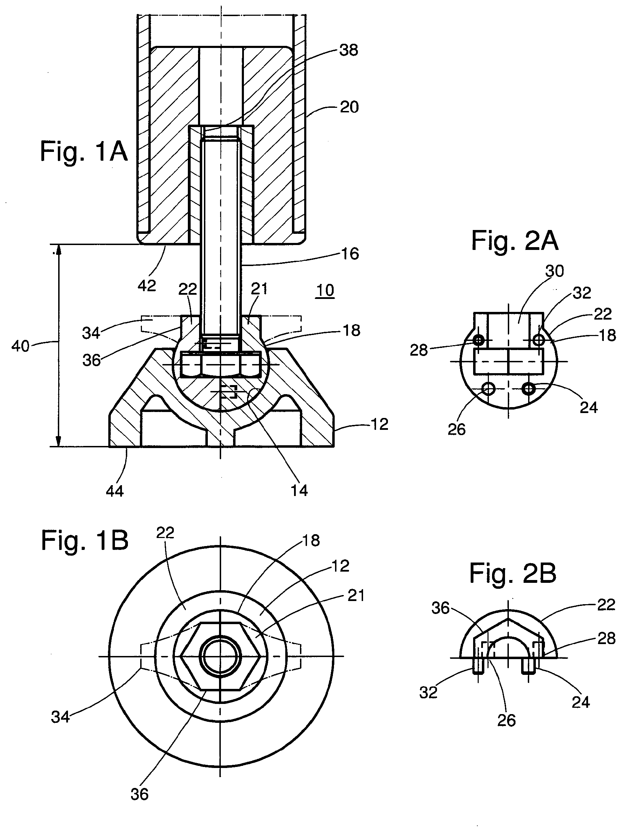

Fig. 1A zeigt einen erfindungsgemäßen gelenkigen Stellfuß 10, umfassend einen Bodenteller 12, der auf der vom Boden abgewandten Seite einen Aufnahmeraum 14 mit der Geometrie einer Teilkugel, vorzugsweise mit eine Halbkugel geringfügig überschreitenden Abmessungen, des weiteren mit einer Gewindestange 16, die an ihrem einen Ende eine in den Aufnahmeraum einbringbare Teilkugel 18 aufweist, wobei die Teilkugel 18 der Gewindestange 16 die Geometrie der Teilkugel des Aufnahmeraums deutlich überschreitet. Das andere Ende der Gewindestange 16 ist in das Ende eines Standbeins 20 eingeschraubt, das Teil einer Maschine- oder Gerätes sein mag und dieses abstützt.

Fig. 2A zeigt eine Stirnansicht einer Schalenhälfte 23, Fig. 2B eine Ansicht von oben auf die Schalenhälfte 22, wobei die beiden Halbschalen 21, 22 durch Stifteinrichtungen 32, 24 die in entsprechende Bohrungen 26, 28 der jeweils anderen Halbschale 22, 21 aufgenommen sind. Zweckmäßigerweise wird man die Stifte und die Bohrungen so ausrichten, dass die beiden Hälften identischen Aufbau haben.

Die beiden Halbschalen 21, 22 bilden einen Hohlraum 30. Die beiden Schalenhälften 21, 22 können außen einen Sechskantansatz 36 oder einen Flügelansatz 34 bilden, um den Bolzen 16 in einem im Bein 20 oder in der Geräteunterseite 42 angebrachten Gewinde 38 verdrehen zu können, um den Abstand 40 zwischen der Geräteunterseite 42 und der Auflagefläche (Boden) 44 einstellen zu können, um so Bodenunebenheiten auszugleichen. Die Flügel 34 dienen dazu, die Gewindestange 16 von Hand zu verdrehen, wenn die Belastung des Fußes sich in Grenzen hält, während bei schwergängigen Anordnungen ein Werkzeug, wie Maulschlüssel zum Drehen des Sechskants 36 dient.

Bei der Ausführungsform der Fig. 1A, 1B bzw. 2A, 2B ist das Material des Fußes 10 bzw. der Kugel 18 nachgiebig, besteht also beispielsweise aus PA (Polyamid), so dass die Kugel in den Hohlraum 14 eingepresst werden kann.

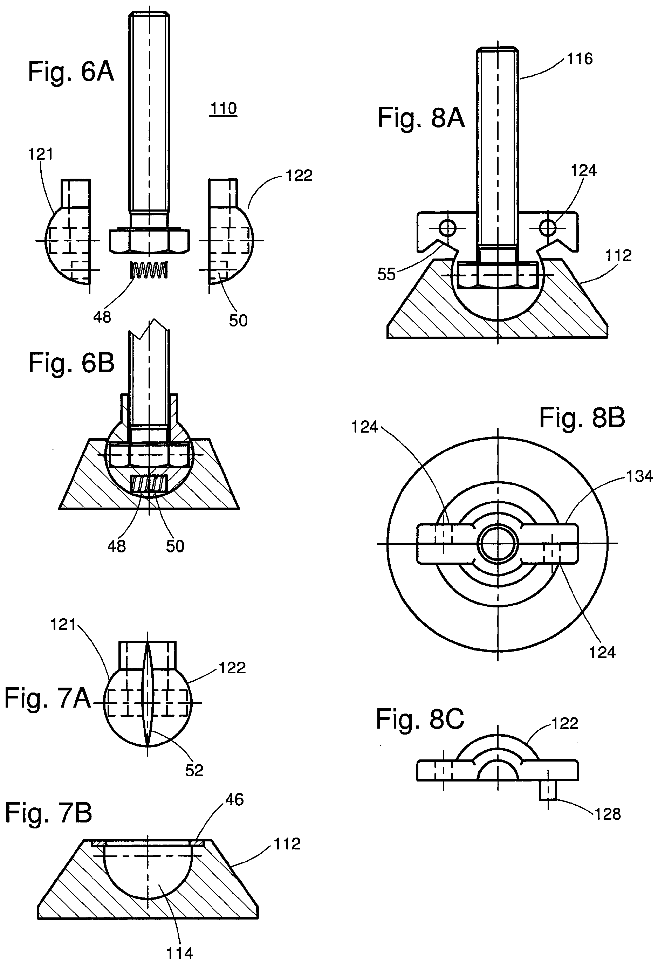

Bei der Ausführungsform gemäß der Fig. 6A, 6B ist der Fuß 112 bei der in Fig. 6A dargestellten Ausführungsform aus hartem Material, wie Metall, gefertigt, siehe Fig. 6A, 6B, 7A und 7B, wobei sich der Aufnahmeraum in Richtung weg von der Bodenfläche verjüngt (Fig. 6B) bzw. eine Scheibe 46 im Bereich des Randes des Aufnahmeraums 114 des Bodentellers eingepresst ist, wobei der Innendurchmesser der Scheibe 46 das Hindurchstecken der zusammengedrückten Halbschalen 122, 222 erlaubt. Zu diesem Zweck sind die Halbschalen 122, 222 durch Federwirkung auseinander gedrückt, wobei die Federwirkung gemäß der Fig. 6A durch eine Spiralfeder 48 erzeugt wird, welche Feder 48 in den Ausnehmungen 50 in den Halbschalen 122 angeordnet sein kann.

Verleiht man dem Material der Kugelhalbschalen 222 (Fig. 7A) eine gewisse Flexibilität, kann auch durch Formgebung Federwirkung erzeugt werden.

Beim Durchtritt durch die Engstelle, gebildet beispielsweise durch den Ring 46, schließt sich der Spalt 52 aufgrund der Nachgiebigkeit des Materials der Halbschalen 222.

Bei der Ausführungsform gemäß der Fig. 6A können die Halbschalen 122 auch aus Metall bestehen, in welchem Falle durch die eingebaute Feder 48 auch die Handmontage möglich ist, während bei der Anordnung gemäß der Fig. 7A die aus Polyamid (PA) bestehende nachgiebige Halbschale aufgrund spannungserzeugender Biegung spannungserzeugend ist.

Bei der Ausführungsform gemäß Fig. 7B können Metallteller 112 mit eingepresster Scheibe 246 Verwendung finden, wobei der innere Durchmesser der Innenöffnung der Scheibe 46 kleiner ist als der der expandierten Kugel 122.

Die Fig. 8A und 8B bzw. 8C zeigen eine weitere Ausführungsform, die mit einem von Flügeln 134 gebildeten Stift 124 arbeitet, der die beiden Hälften der Kugel arretiert, in dem der Stift 134 in eine Bohrung 124 des jeweils anderen Flügels 134 hineinreicht. Die Flügel 134 bilden im übrigen einen Anschlag 55 für die Kippbewegung

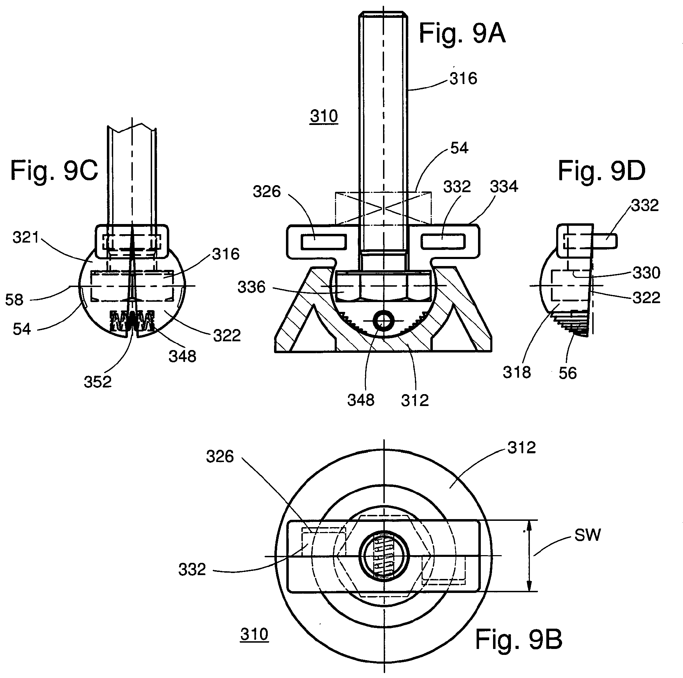

In den Fig. 9A bis 9D ist eine weitere Ausführungsform zu erkennen, bei der ein zusätzlicher Rücksprung 54 die durch den Druck der Kugel 318 auf den Fußteller 312 bewirkten Auftreibkräfte. Entsprechendes gilt, wenn auf der Kugelfläche Stufen 56 angeordnet werden.

Ein zusätzlicher Rücksprung 54 unterhalb der Mittellinie 58, umlaufend, vermindert ebenfalls die Auftreibkräfte, die auf den Teller 312 einwirken.

Auch hier dienen Drehflügel 334 zur Handjustierung und Schlüsselweite SW dient zur Justierung unter Last mittels Werkzeugen. Auch bei dieser Ausführungsform sind die beiden Schalenhälften 316 gleich ausgebildet. Die Minimierung der Auftreibkraft lässt bei gleicher Standfestigkeit kleiner Fußteller und damit Einsperrung von Material zu.

Eine Mutter 54 dient gleichfalls einer Stabilisierung.

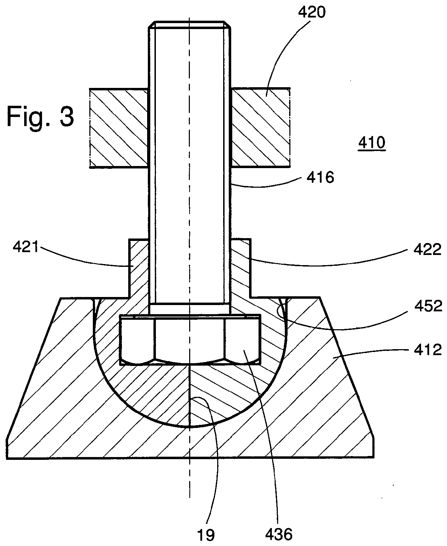

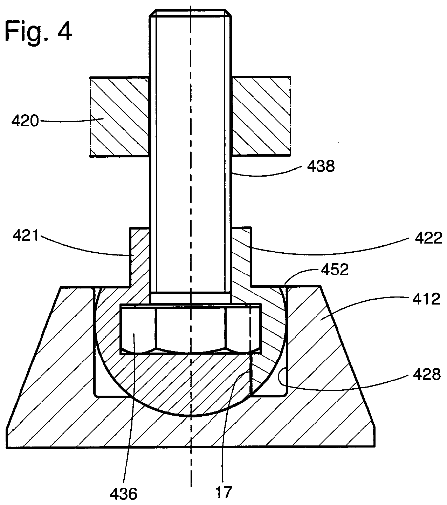

Während die bisherigen Ausführungsformen mit einer Federwirkung arbeiten, um so insbesondere zu verhindern, dass beim Anheben des Fußes 10 die Schwerkraft den Fuß trennt. Es gibt Anwendungsfälle, bei denen es nicht wichtig ist, dass diese Eigenschaft gegeben ist, wie in Ausführungsformen dargestellt, siehe Fig. 3 und 4. Die beiden Ausführungsformen gemäß Fig. 3 und Fig. 4 unterscheiden sich in der Trennungslinie zwischen den beiden Teilkugeln, wobei die Teilkugel 421 gleich ist der Teilkugel 422. Bei Fig. 4 rutscht die Trennungslinie 19 nach rechts, so dass die Teilkugel 422 nur ¼ der Teilkugel 421 ausmacht. Die Teilung 417 gemäß Fig. 4 muss so gelegt sein, dass es noch möglich ist den Kopf 436 der Schraube seitlich in den Hohlraum der Teilkugeleinzuschieben. Bei den Ausführungsformen der Fig. 3,4 sowie 5A und 5B ist erkennbar, dass der Aufnahmeraum für die Kugelteile einen Rücksprung bildet, vielmehr einen Spalt 452, so dass der montierte Fuß beim Anheben des gestützten Gegenstandes 42 aus dem Hohlraum 428 austreten kann. Bei verschiedenen Anwendungsfällen ist es aber kein Nachteil, sondern ermöglicht einen Austausch der Füße.

Bei den Ausführungsformen der Fig. 3 und 4 ist der Hohlraum, in dem die Kugelteile einschiebbar sind, nur an der Unterseite mit einer Kugeloberfläche ausgestattet, in die sich die Kugel mit einem Schraubenkopf umgibt und abstützt.

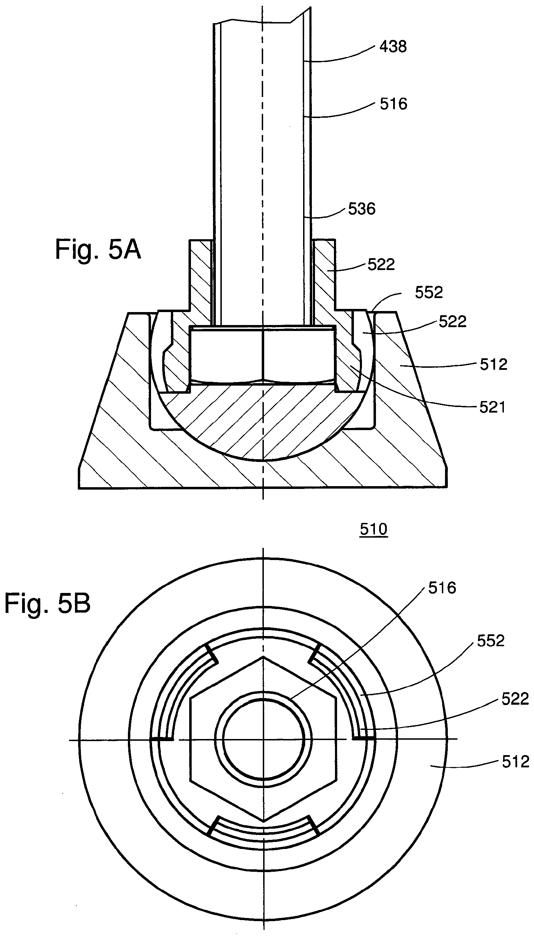

Bei der Ausführungsform gemäß Fig. 5B werden die Teilkugeln durch sechs Zungen 521, 522 gebildet, die fingerartig ineinander greifen.

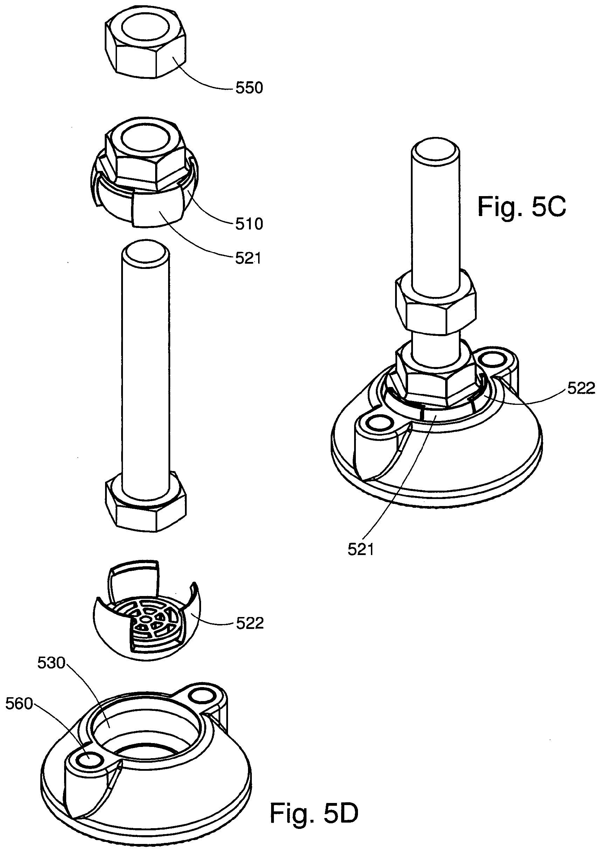

Bei den Fig. 5C, 5D erfolgt die Einbringung der Schraubenköpfe nicht wie bei Fig. 3 seitlich, sondern von oben.

### Gewerbliche Auswertbarkeit

Die Erfindung ist im Schaltschrankbau gewerblich auswertbar.

### Bezugszeichenliste:

- 10, 110, 310, 410, 510: Stellfuß
- 12, 112, 312, 412, 512: Bodenteller
- 14, 114, 314: Aufnahmeraum
- 16, 116, 316, 416, 516: Gewindestange
- 17: Teilungslinie, -ebene
- 18, 318, 518: Teilkugel
- 19: Teilungslinie oder -ebene
- 20, 420: Standbein
- 21, 121, 321, 421, 521: Schalenhälfte, Teilschale
- 22, 122, 222, 322, 422, 522: Schalenhälfte, Teilschale
- 24, 124, 324, 424: Stift
- 26, 326: Stift, Vorsprung
- 28: Bohrung
- 30, 330: Hohlraum
- 32, 332: Bohrung, Einsenkung
- 34, 134, 334: Flügel
- 36, 336, 436, 536: Sechskant, Kopfgewindestange
- 38, 438: Gewinde
- 40: Abstand
- 42: Geräteunterseite
- 44: Auflagefläche, Boden
- 46: Ring
- 48, 348: Spiraldruckfeder
- 50: Aufnahme für Druckfeder
- 52, 152, 352, 452, 552: Spalt
- 54, 554: Kontermutter
- 55: Anschlagfläche
- 56: Stufen umlaufend
- 58: Stufe umlaufend
- 60: Bohrung

## Patentansprüche

1. Gelenkiger Stellfuß (10), umfassend einen Bodenteller (12), der auf der bodenabgewandten Tellerseite einen Aufnahmeraum (14) mit der Geometrie einer Teilkugel, aufweist, vorzugsweise mit eine Halbkugel geringfügig überschreitenden Abmessungen, des weiteren mit einer Gewindestange (16), die an ihrem einen Ende einen in den Aufnahmeraum einbringbare Teilkugel (18) aufweist, wobei die Teilkugel (18) der Gewindestange (16) in den Aufnahmeraum (14) passend aufnehmbar ist, wobei die Gewindestange (16) ein herkömmlicher Schraubbolzen mit Sechskantkopf (36) ist und wobei die in den Aufnahmeraum (14) einbringbare Kugel aus zwei ineinander steckbaren Teilen, z. B. Hälften (Halbschalen) (22) besteht, die den Sechskantkopf (36) drehstarr umschließen, wobei die Geometrie der Teilkugel (18) der Gewindestange (16) die des Aufnahmeraums (14) in Richtung des Gewindeschaftes axial überschreitet.

2. Stellfuß nach Anspruch 1, **dadurch gekennzeichnet, dass** die Teile, z. B. Halbschalen (22) durch Stifte (24, 32) oder durch den Bolzenkopf zueinander ausgerichtet und arretiert werden, und zwar entweder in radialer oder in axialer Richtung der Gewindestange.

3. Stellfuß nach Anspruch 1 oder 2, **dadurch gekennzeichnet, dass** die Teilkugeln oder Halbschalen (22) durch Federwirkung im Aufnahmeraum (14) an dessen Wände angedrückt werden.

4. Stellfuß nach Anspruch 3, **dadurch gekennzeichnet, dass** die Federwirkung durch drei oder sechs winkelmäßig verteilte Blattfedern erzeugt wird, die fingerartig ineinander greifen und die den Schraubenkopf umschließen.

5. Stellfuß nach Anspruch 3, **dadurch gekennzeichnet, dass** die Federwirkung durch spannungserzeugende Form des Materials der Halbschalen erzeugt wird.

6. Stellfuß nach Anspruch 3 oder 4, **dadurch gekennzeichnet, dass** der Bodenteller (12) aus Kunststoff wie PA besteht und dass der Aufnahmeraum (14) sich in Richtung der Bodenfläche verjüngt.

7. Stellfuß nach einem der Ansprüche 3 bis 6, **dadurch gekennzeichnet, dass** der Bodenteller (12) aus Metall besteht, und dass eine Scheibe (46) im Bereich des Randes des Aufnahmeraums (14) des Bodentellers (12) eingepresst ist, wobei der Innendurchmesser der Scheibe das Hindurchstecken der zusammengedrückten Halbschalen (22) erlaubt.

8. Stellfuß nach einem der Ansprüche 2 bis 7, **dadurch gekennzeichnet, dass** die beiden Schalenhälften (22, 322) identisch oder unterschiedlich (422, 421) aufgebaut sind.

9. Stellfuß nach Anspruch 8, **dadurch gekennzeichnet, dass** die eine Seite der Halbschale (322) eine Arretierleiste (324) und die andere Seite der Halbschale einen Rücksprung (326) zur Aufnahme der Arretierleiste (324) der anderen Schalenhälfte aufweist.

10. Stellfuß nach einem der Ansprüche 1 bis 9, **dadurch gekennzeichnet, dass** die Schalenhälften Drehflügel (34) zur Justierung von Hand aufweisen.

11. Stellfuß nach Anspruch 8, 9 oder 10, **dadurch gekennzeichnet, dass** die Schalenhälften Schlüsselweite SW zur Justierung unter Last mittels Werkzeug aufweisen.

12. Stellfuß nach Anspruch 2, **dadurch gekennzeichnet, dass** die Bodenfläche (44) des Bodentellers umlaufende Rippen aufweist.

13. Stellfuß nach Anspruch 2, **dadurch gekennzeichnet, dass** die in der nach unten gerichteten Kugelfläche der Schalenhälften (322) gestuft ist, zur Minimierung der Auftreibkräfte.

14. Stellfuß nach Anspruch 2, **dadurch gekennzeichnet, dass** die von den Halbschalen gebildete Kugelfläche unterhalb der Mittellinie einen umlaufenden Rücksprung (54) zur Verminderung der Auftreibkräfte aufweist.

## Claims

1. An articulated levelling foot (10), comprising a ground plate (12) which has, on the plate side which faces away from the ground, a receiving space (14) with the geometry of a partial sphere, preferably with dimensions which slightly exceed a semi-sphere, and with a threaded rod (16) which has, on one end of it, a partial sphere (18) which can be introduced into the receiving space, wherein the partial sphere (18) of the threaded rod (16) can be received in a fitting manner in the receiving space (14), wherein the threaded rod (16) is a conventional screw bolt with a hexagonal head (36) and wherein the sphere that can be introduced into the receiving space (14) consists of two parts which can be plugged into one another, e.g. halves (half shells) (22), which enclose the hexagonal head (36) in a torsionally stiff manner, wherein the geometry of the partial sphere (18) of the threaded rod (16) axially exceeds that of the receiving space (14) in the direction of the threaded shaft.

2. The levelling foot according to Claim 1, **characterised in that** the parts, e.g. half shells (22), are oriented and locked relative to one another by pins (24, 32) or by the bolt head, namely either in the radial or in the axial direction of the threaded rod.

3. The levelling foot according to Claim 1 or 2, **characterised in that** the partial spheres or half shells (22), by means of spring action in the receiving space (14), are pressed against the walls of said receiving space (14).

4. The levelling foot according to Claim 3, **characterised in that** the spring action is achieved by three or six leaf springs which are distributed at angles and which engage in one another in a finger-like manner and which enclose the screw head.

5. The levelling foot according to Claim 3, **characterised in that** the spring action is generated by the voltage-generating form of the material of the half shells.

6. The levelling foot according to Claim 3 or 4, **characterised in that** the ground plate (12) consists of plastic such as PA and **in that** the receiving space (14) tapers in the direction of the ground surface.

7. The levelling foot according to any one of Claims 3 to 6, **characterised in that** the ground plate (12) consists of metal and that a disc (46) is pressed in the region of the edge of the receiving space (14) of the ground plate (12), wherein the inner diameter of the disc enables the through-insertion of the compressed half shells (22).

8. The levelling foot according to any one of Claims 2 to 7, **characterised in that** the two shell halves (22, 322) are constructed identically or differently (422, 421).

9. The levelling foot according to Claim 8, **characterised in that** one side of the half shell (322) has a locking strip (324) and the other side of the half shell has a recess (326) for receiving the locking strip (324) of the other shell half.

10. The levelling foot according to any one of Claims 1 to 9, **characterised in that** the shell halves have rotary wings (34) for adjustment by hand.

11. The levelling foot according to Claim 8, 9 or 10, **characterised in that** the shell halves have wrench sizes SW for adjustment under load by means of a tool.

12. The levelling foot according to Claim 2, **characterised in that** the ground surface (44) of the ground plate has circumferential ribs.

13. The levelling foot according to Claim 2, **characterised in that** the downwardly-oriented spherical surface of the shell halves (322) is tiered, in order to minimise the vertical thrust forces.

14. The levelling foot according to Claim 2, **characterised in that** the spherical surface formed by the half shells has a circumferential recess (54) below the centre line, in order to reduce the vertical thrust forces.

## Revendications

1. Pied réglable articulé (10), comportant une plaque de sol (12) qui comprend, sur le côté de la plaque détourné du sol, un espace de logement (14) ayant la géométrie d'une sphère partielle, ayant de préférence des dimensions dépassant légèrement celles d'une hémisphère, et de plus une tige filetée (16) qui présente à l'une de ses extrémités une sphère partielle (18) susceptible d'être introduite dans l'espace de logement, la sphère partielle (18) de la tige filetée (16) pouvant être logée de façon adaptée dans l'espace de logement (14),
dans lequel
la tige filetée (16) est un boulon de vissage habituel ayant une tête à six pans (36) et la sphère susceptible d'être introduite dans l'espace de logement (14) est constituée de deux parties enfichables l'une dans l'autre, par exemple de deux moitiés (demi-coques) (22), qui enferment rigidement en rotation la tête à six pans (36),
et la géométrie de la sphère partielle (18) de la tige filetée (16) dépasse axialement celle de l'espace de logement (14) en direction de la tige filetée.

2. Pied réglable selon la revendication 1,
**caractérisé en ce que**
les parties, par exemple les demi-coques (22), sont orientées mutuellement et arrêtées par des goupilles (24, 32) ou par la tête de boulon, et ceci soit en direction radiale soit en direction axiale de la tige filetée.

3. Pied réglable selon la revendication 1 ou 2,
**caractérisé en ce que**
les sphères partielles ou les demi-coques (22) sont poussées par effet ressort dans l'espace de logement (14) contre ses parois.

4. Pied réglable selon la revendication 3,
**caractérisé en ce que**
l'effet ressort est généré par trois ou par six ressorts à lame répartis angulairement, qui s'imbriquent les uns dans les autres à la manière de doigts et qui enferment la tête de vis.

5. Pied réglable selon la revendication 3,
**caractérisé en ce que**
l'effet ressort est généré par une forme générant une contrainte du matériau des demi-coques.

6. Pied réglable selon la revendication 3 ou 4,
**caractérisé en ce que**
la plaque de sol (12) est constituée en matière plastique, telle que le PA, et **en ce que** l'espace de logement (14) va en se rétrécissant en direction de la surface de sol.

7. Pied réglable selon l'une des revendications 3 à 6,
**caractérisé en ce que**
la plaque de sol (12) est constituée en métal et **en ce qu'**un disque (46) est pressé dans la zone du bord de l'espace de logement (14) de la plaque de sol (12), le diamètre intérieur du disque permettant d'enficher les demi-coques (22) comprimées.

8. Pied réglable selon l'une des revendications 2 à 7,
**caractérisé en ce que**
les deux demi-coques (22, 322) sont de structure identique ou différente (422, 421).

9. Pied réglable selon la revendication 8,
**caractérisé en ce que**
l'un des côtés de la demi-coque (322) comprend une baguette d'arrêt (324) et l'autre côté de la demi-coque comprend un retrait (326) pour recevoir la baguette d'arrêt (324) de l'autre moitié de coque.

10. Pied réglable selon l'une des revendications 1 à 9,
**caractérisé en ce que**
les moitiés de coque présentent des ailettes rotatives (34) pour l'ajustement à la main.

11. Pied réglable selon la revendication 8, 9 ou 10,
**caractérisé en ce que**
les moitiés de coque présentent une largeur de clé SW pour l'ajustement sous charge au moyen d'un outil.

12. Pied réglable selon la revendication 2,
**caractérisé en ce que**
la surface de sol (44) de la plaque de sol présente des nervures périphériques.

13. Pied réglable selon la revendication 2,
**caractérisé en ce que**
la surface sphérique des moitiés de coque (322) dirigée vers le bas est étagée pour minimiser les efforts de poussée.

14. Pied réglable selon la revendication 2,
**caractérisé en ce que**
au-dessous de la ligne médiane, la surface sphérique formée par les demi-coques présente un retrait périphérique (54) pour réduire les efforts de poussée.
